# EUROPÄISCHE PATENTSCHRIFT

(11) **EP 4 186 465 B1**
(45) Veröffentlichungstag und Bekanntmachung des Hinweises auf die Patenterteilung: **22.04.2026**
(21) Anmeldenummer: 21211407.8
(22) Anmeldetag: 30.11.2021
(51) Int. Cl.: A61C 13/00, A61C 13/20, A61C 13/01

(54) **HERSTELLVORRICHTUNG FÜR DIE HERSTELLUNG EINES ROHLINGS EINES DENTALRESTAURATIONSTEILES, VERFAHREN FÜR DIE HERSTELLUNG EINES ROHLINGS FÜR EIN DENTALRESTAURATIONSTEIL**
MANUFACTURING DEVICE FOR THE PRODUCTION OF A DENTAL RESTORATION PART BLANK AND METHOD FOR THE PRODUCTION OF A DENTAL RESTORATION PART BLANK
DISPOSITIF DE FABRICATION POUR LA FABRICATION D'UNE ÉBAUCHE D'UNE PROTHÈSE DENTAIRE, PROCÉDÉ DE FABRICATION D'UNE ÉBAUCHE POUR UNE PROTHÈSE DENTAIRE

(43) Veröffentlichungstag der Anmeldung: 31.05.2023
(73) Patentinhaber: Ivoclar Vivadent AG, 9494 Schaan (LI)
(72) Erfinder: FREI, Roger, 9436 Balgach (CH); KIEM, Markus, 39020 Kastelbell/Tschans (BZ) (IT); GEIER, Markus, 39010 Tisens (IT)
(74) Vertreter: Baldus, Oliver

(56) Entgegenhaltungen:
- EP-A1- 3 597 144
- WO-A1-2016/188901
- US-A1- 2021 128 283

## Beschreibung

Die vorliegende Erfindung betrifft eine Herstellvorrichtung für die Herstellung eines Rohlings eines Dentalrestaurationsteiles, gemäß dem Anspruch 1 und ein Verfahren zur Herstellung eines Rohlings für ein Dentalrestaurationsteil, gemäß dem Anspruch 12 Herstellvorrichtungen für Dentalrestaurationsteile wie Prothesen sind seit langem bekannt. Bereits aus der DE 652 821 B1 lässt sich eine Spritzgussform entnehmen, in welche zu polymerisierende Massen eingefüllt werden.

Aus der DE 20 2006 006 286 U1 ist ein mehrfarbig eingefärbter Rohling bekannt. Ein solcher ist dafür bestimmt, in einer Dentalfräsvorrichtung zu beispielsweise einer Dentalprothese gefräst zu werden.

Aus der EP 3 064 170 A1 ist eine bedeutende Verbesserung für die Herstellung eines Rohlings einer dentalen Prothese ersichtlich, nämlich ein besonderer zweifarbiger Rohling. Der Rohling liegt in Scheibenform vor und weist zum einen vorgeformtes Zahnmaterial und zum anderen vorgeformtes Prothesenbasis-Material auf. Aus einem solchen Rohling lassen sich sowohl Vollprothesen als auch Teilprothesen komplett fertig fräsen.

Für die Herstellung eines derartigen Rohlings ist eine Herstellvorrichtung vorgeschlagen worden, die mit einem Einlegekörper arbeitet. Gemäß diesem Vorschlag wird zunächst das Zahnmaterial unter Zuhilfenahme des Einlegekörpers spritzgegossen und teilpolymerisiert. Hieran anschließend wird der Einlegekörper entfernt und das Basismaterial zwischen der freiliegenden Oberfläche des Zahnmaterials und einem Deckel spritzgegossen. Die Oberfläche des Zahnmaterials wird für das Basismaterial gleichsam als Teil der Form verwendet und bildet die Grenzfläche zwischen diesen Materialien. Durch das anschließende Fertigpolymerisieren ergibt sich eine besonders gute Verbindung zwischen Basismaterial und Zahnmaterial.

Bei den durchgeführten internen Versuchen war jedoch die Höhenlage der Grenzfläche zwischen Zahnmaterial und Basismaterial recht unterschiedlich. Offenbar ist der Polymerisationsschrumpf von Charge zu Charge unterschiedlich, und es kommt beim Spritzgießen auch auf die Fülldosierung an.

Um in die Nähe der geforderten Toleranzen zu kommen, ist es weiterhin vorgeschlagen worden, mit übermäßig gefertigten Metallformen und mit einem kalkulierten Materialüberschuss zu arbeiten. Dies ist zwar möglich und stellt eine gewisse Verbesserung dar, ist jedoch für die großtechnische Fertigung ungeeignet. Erschwerend kommen Rohstoffschwankungen, Einwaage- und Prozesstoleranzen hinzu.

Die Druckschrift WO 2016/188901 A1 betrifft einen Dentalpressofen sowie ein Verfahren zum Betrieb eines Dentalpressofens.

Die Druckschrift US 2021/128283 A1 betrifft einen Prothesenblock zur Herstellung von Zahnersatz im Dentalbereich.

Die Druckschrift EP 3 597 144 A1 betrifft eine Dentalprothese.

Daher liegt der Erfindung die Aufgabe zugrunde, eine Herstellvorrichtung für die Herstellung eines Rohlings eines Dentalrestaurationsteiles und Verfahren zur Herstellung eines Rohlings für ein Dentalrestaurationsteil zu schaffen, die für die großtechnische Fertigung besser geeignet sind, aber dennoch eine verbesserte Genauigkeit ermöglichen.

Diese Aufgabe wird erfindungsgemäß durch Anspruch 1 bzw. gelöst. Vorteilhafte Weiterbildungen ergeben sich aus den Unteransprüchen.

Eine Herstellvorrichtung ist für die Herstellung eines insbesondere zu polymerisierenden Rohlings eines Dentalrestaurationsteiles mit einer Form für die Aufnahme von Rohlingsmaterial ausgestattet. Die Form hat eine insbesondere topfförmige oder napfförmige Basis und einen Stempel oder - ggf. haubenförmigen - Deckel. Bevorzugt ist als Unterlage ein Förderweg vorgesehen, auf welchem die Form abstellbar ist oder steht. Dieser kann ein Förderband sein, oder eine feste, bevorzugt glatte, Oberfläche, auf der die Form verschiebbar ist.

Es ist bevorzugt ein Einlegekörper mit einer Struktur an seiner Unterseite vorgesehen, die in die Form einlegbar ist. Ggf. kann dieser mit dem Stempel oder Deckel einstückig sein. Er nimmt bevorzugt den oberen Teil der Basis der Form ein, so dass darunter ein Raum verbleibt, der mit Material, insbesondere Spritzguss-Zahnmaterial, ausfüllbar ist.

Es ist eine Heizvorrichtung für die Form vorgesehen, die insbesondere mit dem Deckel in Wärmeleitverbindung steht oder in diesem angeordnet ist, und eine Steuervorrichtung für die Herstellvorrichtung.

Alternativ kann auch von unten und/oder von beiden Seiten geheizt werden. Die Polymerisation kann auch durch eine andere Methode (Licht) gestartet oder gesteuert werden. In diesem Fall ist eine transparente Form bevorzugt.

Die Form steht unter hohem Druck, der z.B. 80 Bar betragen kann. Anschließend an die Polymerisation kann eine starke Abkühlung erfolgen. Ferner ist es auch möglich, autopolymerisierende Kunststoffe zu verwenden.

Ferner ist eine Höhenmesseinrichtung an die Steuervorrichtung angeschlossen, die die Höhe einer mit dem Stempel oder Deckel verbundenen Referenzfläche misst, bezogen auf die Basis oder bezogen auf die Unterlage.

Die Steuervorrichtung berechnet basierend auf dieser gemessenen Höhe die Höhenlage der Struktur im Rohling.

Für die Berechnung wird davon ausgegangen, dass alle festen, z.b. metallischen, Teile der Herstellvorrichtung bekannte und konstante Abmessungen haben. Hierzu gehört die Basis. Wenn die Basis topf- oder napfförmig ist, hat sie einen Basisboden und Basiswände. Die Basis steht auf der festen Unterlage. Der Deckel - oder Stempel - hat eine bekannte Höhe, ebenso der Einlegekörper. Wenn diese beiden einstückig sind, haben sie eine bekannte Gesamthöhe. Die Referenzfläche ist an oder auf dem Deckel angebracht und bevorzugt durch dessen Oberseite gebildet.

Es ist bevorzugt, dass das das zunächst bereitgestellte, erste, Material, bevorzugt das Zahnmaterial, - als ersten Teil - in die Form unter Verwendung eines ersten, mit der Struktur versehenen, Deckels spritzgegossen wird, und dann der erste Deckel entnommen und der zweite, plane Deckel eingesetzt und das zweite Material - als zweites Teil -, z.B. das Basismaterial, spritzgegossen wird.

Die Erfindung ist jedoch nicht auf diese Abfolge beschränkt.

Anstelle dessen kann die Form auch nur für Herstellung des ersten Teils verwendet werden, mit einer anschließenden Höhenmessung dieses Teiles. Der zweite Teil wird dann in einer anderen Form auf den ersten Teil aufgebracht.

Alternativ kann der zweite Teil nach der Höhenmessung des ersten Teils auch aufgeklebt werden.

Anstelle des Spritzgießens kann der erste Teil auch subtraktiv, z.B. per Fräsen, hergestellt werden. Die Höhenmessung kann dann nach Einlegen des ersten Teils in die Form erfolgen. Hierzu weist der erste Teil bevorzugt eine plane Referenzfläche auf, deren Höhe von der Höhenmesseinrichtung gemessen wird. Das Messergebnis wird der Steuervorrichtung zugeleitet.

Ferner kann der zweite Teil - unabhängig von dem ersten Teil - auch in einer beliebigen Weise hergestellt werden. Nach der Höhenmessung des ersten Teils kann der zweite Teil aufgebracht werden. Er kann auch additiv, z.B. per 3D-Druck erzeugt sein und dann aufgeklebt oder aufpolymerisiert werden.

Die Höhenmesseinrichtung misst ganz einfach die Höhe dieser Referenzfläche über der Unterlage, auf der die Basis der Form steht. Damit ist die Gesamthöhe der Form bekannt. Diese interessiert allerdings an sich nicht, aber sie erlaubt die Berechnung der Höhenlage der Struktur im - späteren - Rohling, und zwar nach folgender Formel:

Hₛ = H_{g} - H_{d} - Hₑ - H_{b}

Hierbei ist:
Hₛ: Höhenlage der Struktur im - späteren - Rohling
H_{g}: gemessene Gesamthöhe Form
H_{d}: bekannte Höhe Deckel
Hₑ: bekannte Höhe Einlegekörper
H_{b}: bekannte Höhe Basisboden

Die Höhenlage der Struktur entspricht der Lage des Materialübergangs in dem scheibenförmigen Rohling. Oberhalb des Materialübergangs ist Basismaterial in einer Farbe A vorgesehen, unterhalb des Materialübergangs ist Zahnmaterial in einer Farbe B vorgesehen. Die Genauigkeit des Materialübergangs von Farbe A zu Farbe B stellt eine essentielle Grundlage zur ästhetischen Fertigung von Prothesen, Hybridprothesen oder Teilprothesen, insbesondere von Prothesenbasen, aus den mehrfarbigen Scheibenrohlingen dar.

Bevorzugt gibt die Steuervorrichtung eine Information aus, ob die gemessene Höhe innerhalb eines Toleranzbereichs liegt oder nicht. Der zahntechnische Toleranzbereich beträgt erfahrungsgemäß +- 500µm.

Mit der erfindungsgemäßen Lösung lässt sich dieser Toleranzbereich bei Bedarf deutlich unterbieten, auch wenn bspw. Rohstoffschwankungen, Einwaage- und Prozesstoleranzen bestehen, die zu Materialübergangsverschiebungen im genannten Bereich führen. Durch die messtechnische Ermittlung der exakten Materialhöhe innerhalb der Form während des Herstellprozesses, insbesondere nach der Polymerisation der ersten Materialschicht, kann bei der späteren Fertigung mittels CAD/CAM Technologie die genaue bzw. annähernd genaue Position des Materialübergangs für jeden einzelnen Rohling übermittelt und beim Fräsen exakt getroffen werden.

Im gesamten System aus der Rohling-Scheibe, dem Fräshalter und der Fräsmaschine kann ein sehr großer Toleranzfaktor stark reduziert werden, welcher Einfluss auf das optische Ergebnis hat.

Die Messwerte jedes Rohlings werden dazu manuell in die CAM übertragen oder auf einen RFID-Transponder gespeichert und können beim Einlesen des Rohlings von der CAM-Software direkt identifiziert werden. Die Software überträgt dann die Kompensationswerte auf das CNC-Fräsprogramm. So wird gewährleistet, dass der Materialübergang positionsgetreu getroffen und eine konstant hohe Ästhetik der Prothesenbasis generiert wird.

Mehrfarbige Fräsrohlinge, insbesondere zur Fertigung von monolithischen Prothesenbasen weisen einen parallel verlaufenden, horizontalen Materialübergang von Zahnmaterial zu dem Basismaterial, das auch Gingivamaterial genannt wird, aus. Dies führte bei den vorgeschlagenen Lösungen vor der vorliegenden Erfindung unweigerlich zu einer ungenügenden ästhetischen Ausgestaltung, insbesondere des Gingivasaumes oder im dorsalen Bereich der Prothesenbasen. Intensive Nacharbeit bspw. durch Anbringung von Charakterisierungsmaterialien waren notwendig und wurden in Kauf genommen.

Erfindungsgemäß sind diese Probleme überwunden. Mit der Erfindung ist eine sehr befriedigende ästhetischen Ausgestaltung, insbesondere des Gingivasaumes oder im dorsalen Bereich der Prothesenbasen, möglich.

Zudem verringert eine Innengeometrie mit vordefiniertem Gingivasaum in Form einer Wellenlinie (ähnlich dem Verlauf eines natürlichen Gingivasaumes) die Nacharbeit und verbessert das Ergebnis.

Das erfindungsgemäße Herstellverfahren für z.B. mehrfarbige Fräsrohlinge erlaubt eine exakte Ermittlung der Materialhöhe, insbesondere der Übergangslinie von Farbe A zu Farbe B, die durch die Grenzfläche gebildet wird. Dieser technische Vorteil ermöglicht den Übertrag von Messdaten auf die Frässoftware oder sonstige CAM-Software. Die somit mögliche Sicherstellung der annähernd genauen Positionierung des Übergangs ist ein signifikanter Fortschritt.

Über ein Messsystem wird eine Information zur Position/Ausrichtung der Innengeometrie bzw. des Farbübergangs zwischen den Materialien ermittelt, welche für den nachfolgenden CAD/CAM-Prozess verwendet werden kann.

Zur Übermittlung und Wiedergabe der exakten Position/Ausrichtung der nicht einsehbaren Innengeometrie der Scheibe, nämlich der Grenzfläche zwischen den Materialien, wird z.B. gemäß der vorstehenden Formel eine Höhenlage der Grenzfläche berechnet.

Basierend hierauf wird ein Kompensationswert ermittelt, z.B. als - positive oder negative - Differenz zwischen einer Nenn-Höhenlage und der berechneten Höhenlage der Grenzfläche. Dieser Kompensationswert wir an ein CAD/CAM System übergeben. Damit ergibt sich eine Steigerung und Gewährleistung einer maximalen und reproduzierbaren Ästhetik. Umständliche Nacharbeit oder Ausbesserungen an den Prothesenbasen entfallen.

In vorteilhafter Ausgestaltung ist es vorgesehen, dass der Kompensationsfaktor am Rohling mittels Aufdruck, Beilage oder RFID-Transponder ablesbar/abrufbar ist. Er kann auch in einer zentralen Cloud verschlüsselt hinterlegt sein.

In vorteilhafter Ausgestaltung ist es vorgesehen, dass die Form auf einer Unterlage abgestellt ist, die damit die Unterseite der Form festgelegt. Eine Höhenmesseinrichtung ist in der Lage im, den Abstand zwischen der Oberseite der Form und der Basis, nämlich der Unterseite der Basis, zu messen.

Der obere Teil der Form wird von einem Stempel oder Deckel gebildet und, die die Basis oben abdeckt und damit einen Formraum für das Spritzgießen bereitstellt. Dieser Deckel weist eine Oberseite auf. Diese dient als Referenzfläche. Die Höhenmesseinrichtung misst den Abstand zwischen der Oberseite des Deckels und der Basis und damit zwischen der Referenzfläche und der Unterlage.

Die Höhenmesseinrichtung weist in der bevorzugten Ausgestaltung mindestens einen Tastfühler auf. Dieser misst die Höhenlage der Referenzfläche. In einer weiter verbesserten Ausgestaltung weist die Höhenmesseinrichtung mindestens drei Tastfühler auf. Dadurch ist sie in der Lage, die Höhe der Grenzfläche auch im dreidimensionalen Raum zu ermitteln.

In weiteren vorteilhaften Ausgestaltungen weist die Höhenmesseinrichtung anstelle dessen einen optischen Fühler, einen Laser-Entfernungsmesser, eine Ultraschallfühler, eine Infrarot-Entfernungsmesser oder einen optischen Fühler auf. Der optische Fühler kann auch eine Referenzoptik aufweisen, die mit mindestens einem Referenzpunkt zusammenwirkt, dessen Position sie erkennt und damit eine Verlagerung der Referenzfläche, insbesondere an dem Deckel, gegenüber der Basis oder der Unterlage erfasst und der Steuervorrichtung übermittelt.

Anstelle dessen kann die Höhenmesseinrichtung auch einen kapazitiven oder einen DMS-Fühler aufweisen. Diese sprechen bereits auf geringe Relativbewegungen zwischen Deckel und Basis an und erfassen diese.

Bei derartigen Fühlern ist bevorzugt ein Element des Fühlers am Deckel, z.B. dessen Schürze, und das andere Element diesem benachbart an der Basis angebracht.

Es ist bevorzugt, dass die Höhenmesseinrichtung eine Genauigkeit von weniger als 2 mm, insbesondere weniger als 0,3 mm und bevorzugt etwa 0,1 mm aufweist. Die bevorzugte Höhenmesseinrichtung arbeitet mit einer Genauigkeit von 0,01 mm. Die eingestellte Toleranz ist 0,5mm. Wenn also die gemessene Schicht z.B. 0,6mm höher als die definierte Toleranz ist, z.B. höher als 0,6mm, dann wird das Produkt als schlecht deklariert.

Die tatsächliche Höhenlage wird beispielsweise gemäß der vorstehenden Formel basierend auf den ermittelten Messdaten berechnet und damit die Höhenlage der Struktur festgestellt. Die Struktur kann unterschiedlich gestaltet sein aber erfindungsgemäß Wellenförmig ist.

Es werden drei Referenzpunkte der Struktur festgelegt, und die Steuervorrichtung gibt Daten zur Höhenlage der Struktur basierend auf den drei Referenzpunkten aus.

Die in Datenform vorliegende Höhenlage der Struktur des betreffenden Rohlings wird erfindungsgemäß diesem in geeigneter Weise zugeordnet, damit jederzeit die Daten zur Höhenlage zur Verfügung stehen. Beispielsweise kann hierzu eine Ausgabevorrichtung vorgesehen sein, die an die Steuervorrichtung angeschlossen ist und die Daten in Zuordnung zu den betreffenden Rohlingen in einer Datenbank abspeichert.

Anstelle dessen kann die Ausgabevorrichtungen auch ein Drucker für die Erzeugung von Etiketten sein. Diese Etiketten werden dann in ausgedruckter Form an dem Rohling angebracht. Anstelle dessen kann die Ausgabevorrichtung auch als RFID-Chip-Programmiervorrichtung ausgebildet sein. Nach Programmierung wird dann der erzeugte und programmierte RFID-Chip an dem Rohling angebracht. Die Höhenlage-Daten werden also entweder elektronisch zugeordnet, z.b. über eine Datenbank, oder über einen Informationsträger in räumliche Nähe zu dem Rohling gebracht.

Der Informationsträger kann ein beliebiges Medium sein, über das die Daten dem Rohling zugeordnet werden können. Beispielsweise können die Daten auch auf dem Rohling aufgelasert werden, sie können eingraviert werden, sie können eingeprägt werden oder sie können gedruckt werden, sei es im Klartext oder sei es codiert.

In vorteilhafter Ausgestaltung ist eine Heizvorrichtung für die Form vorgesehen, die mit dem Deckel in Wärmeleitverbindung steht. In vorteilhafter Ausgestaltung sind zwei Deckel/Stempel vorgesehen, einmal mit und einmal ohne Einlegekörper/Struktur. Zunächst wird der erste Deckel, der an seiner Unterseite die Struktur oder einen Einlegekörper mit Struktur aufweist, auf die Basis aufgesetzt. Das erste Material, bevorzugt Zahnmaterial, wird eingespritzt. Es erfolgt eine Polymerisation oder mindestens eine Teilpolymerisation dieses Materials. Der erste Deckel wird entnommen. Das Material weist an seiner Oberseite eine Gegenstruktur auf, die exakt dem Abdruck der Struktur entspricht.

Der zweite Deckel ist an seiner Unterseite plan und hat eine geringere Höhe als der erste Deckel. Zwischen seiner Unterseite und der Gegenstruktur besteht ein Freiraum. In diesen wird nun das zweite Material, bevorzugt Basismaterial, eingespritzt, Hierbei bildet die Gegenstruktur einen Teil des Formraums. Es wird erneut eine Polymerisation vorgenommen, dergestalt, dass nun beide Materialien fertigpolymerisiert sind. Nach Abkühlen wird die Entformung vorgenommen, und ein Fräsrohling als Halbprodukt ist fertiggestellt.

Es ist auch möglich, dass der erste Teil des Rohlings - aus dem ersten Material - in eine andere Form übergeben und dort mit dem zweiten Teil versehen und insofern die Rohlingsscheibe dort fertiggestellt wird, Hiermit lässt sich ein Zeit- und ggf. Energie sparender Ablauf realisieren.

In vorteilhafter Ausgestaltung ist eine Ausgabevorrichtung an die Steuervorrichtung angeschlossen. Diese gibt die Höhenlage der Struktur gegenüber einer Unterlage, insbesondere einem Förderweg, auf welchem die Form abstellbar ist oder steht, aus.

Alternativ wird die Gesamthöhe von Basis und Stempel oder Deckel ausgegeben.

In weiterer Ausgestaltung erfolgt die Ausgabe an eine Datenbank für die Zuordnung der Daten zu einem je geformten Rohling für das Dentalrestaurationsteil, oder an einen Drucker für die Erzeugung von Etiketten, mit welchen Etiketten für die Anbringung an dem Rohling druckbar sind, oder an eine RFID-Chip-Programmiervorrichtung.

Alternativ ist es vorgesehen, dass die Steuervorrichtung die Daten in einem Speicher, insbesondere einer Datenbank, abspeichert, welcher Speicher in Zugriff, insbesondere in online-Zugriff einer Fräsmaschine für das Fräsen des Dentalrestaurationsteils bringbar ist.

Die Steuervorrichtung führt eine Berechnung durch, um die Höhenlage der Struktur im Rohling zu ermitteln. Hierzu ist in ihr der bekannte Abstand zwischen der Unterseite des Einlagekörpers und der Oberseite des Deckels abgespeichert. Von diesem zieht sie die von der Höhenmesseinrichtung gemessene Höhe und den Abstand zwischen der unteren Innenseite der Form und der Unterseite der Form ab. So ermittelt sie die Höhenlage der Struktur, und/ oder die Gesamthöhe der Basis mit Stempel oder Deckel.

In einer weiteren Ausgestaltung der Beschreibung bildet die Herstellvorrichtung und das Rohlingsmaterial ein System zur Herstellung eines Halbprodukts als ein Fräsrohling. Dieser ist vorteilhafterweise scheibenförmig. Aus dem Fräsrohling lassen sich in einer dentalen Fräsvorrichtung dentale Prothesen oder Teilprothesen erzeugen. Günstig ist es, wenn als Rohlingsmaterialien Zahnmaterial und Basismaterial eingesetzt sind und die Struktur einer Grenzfläche zwischen Zahnmaterial und Basismaterial in einem herzustellenden Halbprodukt entspricht, und insbesondere entlang eines Gingivasaumes in dem Halbprodukt eine Kettenlinie bildet. Verschiedene Abwandlungen des erfindungsgemäßen Verfahrens - und damit auch der für die Ausführung erforderlichen Vorrichtungen - sind möglich. Das Zahnmaterial und das Basismaterial können polymerisierbare Kunststoffe wie PMMA, aber auch Keramiken wie Zirkondioxid oder Lithiummetasilikat, als Halbfertigteil verwendet wird, oder auch Composites oder beliebige andere geeignete Dentalmaterialien.

Es ist auch möglich, verschiedene der vorstehend genannten Materialien für Zahnmaterial und Basismaterial zu kombinieren. Der Herstellungsprozess muss hierbei selbstverständlich an das je verwendete Material angepasst werden, also z.B.

Polymerisieren (mind. Teilpolymerisieren) bei Kunststoff und Sintern oder isostatischen Pressen (heißisostatisch oder kaltisostatisch, bevorzugt kaltisostatisch) bei Keramik. Grundsätzlich bestehen folgende Möglichkeiten für das Bereitstellen eines innenstrukturierten Rohlings für die Erstellung einer Dentalprothese oder -teilprothese: Hierbei kann das Zahnmaterial das erste Material sein, oder das Basismaterial kann das erste Material sein, und je das andere dann das zweite Material.

Das erste Material wird subtraktiv hergestellt und das zweite Material wird auf dieses additiv aufgebracht.

Das erste Material wird subtraktiv hergestellt und das zweite Material wird subtraktiv hergestellt und dann werden beide Materialien zusammengeklebt.

Das erste Material wird durch, insbesondere isostatisches, Pressen hergestellt und das zweite Material wird auf dieses additiv aufgebracht.

Das erste Material wird subtraktiv hergestellt und das zweite Material wird durch, insbesondere isostatisches, Pressen auf dieses additiv aufgepresst.

Das erste Material wird durch, insbesondere kaltisostatisches, Pressen hergestellt und das zweite Material wird durch, insbesondere kaltisostatisches, Pressen auf dieses additiv aufgepresst. Bei dieser Ausführungsform kann überraschend auf die Verwendung von Klebstoff verzichtet werden.

In an sich bekannter Weise wird beim, insbesondere isostatischen, Pressen der Schwund ("Sinterschwund") berücksichtigt. Damit lässt sich die Ziel-Lage der Wellenstruktur, vorab genau festlegen, so dass die Kettenlinie der Grenzlinie später dem Gingivasaum entspricht.

Das erste Material wird in eine mit der Höhenmesseinrichtung ausgestattete Form eingesetzt, deren Deckel das Negativabbild der Struktur hat. Die Höhenlage des Deckels wird - ggf. dreidimensonal - gemessen und diesem Exemplar des Grünlings zugeordnet, z.B. in einer Datenbank zum Einzel-Grünling gespeichert.

In einer bevorzugten Ausgestaltung wird das erste Material uniaxial vorgepresst, und das zweite Material uniaxial oder isostatisch vorgepresst. Beide Vorprodukte (= "Grünlinge") werden dann subtraktiv bearbeitet, insbesondere gefräst, zur Ausbildung der Struktur an den später aufeinander zu weisenden Flächen, das zweite Material mit dem Negativabbild der Struktur, das auch als Komplementärstruktur bezeichnet wird. Die Grünlinge werden aufeinander aufgesetzt und gemeinsam kaltisostatisch gepresst, und dabei final pressverdichtet und miteinander verbunden.

Anschließend werden die verbundenen Grünlinge entbindert und vorgesintert.

Anschließend werden die verbundenen Grünlinge in die mit der Höhenmesseinrichtung ausgestattete Form eingesetzt, deren Deckel nunmehr flach ist. Die Höhenlage des Deckels wird - ggf. dreidimensonal - gemessen und diesem Exemplar des verbundenen Grünlings zugeordnet, z.B. in einer Datenbank zum Grünling gespeichert.

Damit ist der verbundene Grünling als Halbprodukt - auch "Rohling" genannt - fertig zum Verkauf, zusammen mit den Daten aus der Datenbank zur Höhenlage der Innenstruktur.

Der Anwender kann dann aus diesen das gewünschte Dentalrestaurationsteil oder die gewünschten Dentalrestaurationsteile herausfräsen und diese dicht sintern. Die Höhenlage der Struktur berücksichtigt der Anwender bevorzugt bereits bei der CAD, oder spätestens bei der CAM, also beim Fräsen.

Weitere Einzelheiten, Vorteile und Merkmale ergeben sich aus der nachfolgenden Beschreibung mehrerer Ausführungsbeispiele der Erfindung anhand der Zeichnung. Es zeigen:
- Fig. 1: eine schematisierte Ausführungsform der Erfindung unter Darstellung einer Form einschließlich eines Deckels und eines Tastfühlers, in perspektivischer Darstellung;
- Fig. 2: eine schematisierte Ausführungsform der Erfindung unter Darstellung einer Form einschließlich eines Deckels und der Tastfühler, in perspektivischer Darstellung;
- Fig. 3: eine Schnittdarstellung einer weiteren Ausführungsform der Erfindung, ebenfalls in schematisierte Form;
- Fig. 4: eine Schnittdarstellung einer weiteren Ausführungsform der Erfindung, ebenfalls in schematisierte Form;
- Fig. 5: eine Schnittansicht eines vorab erstellten ersten Teils, nach Einlegen in die Form; und
- Fig. 6: eine schematische Ansicht eines hergestellten Rohlings.

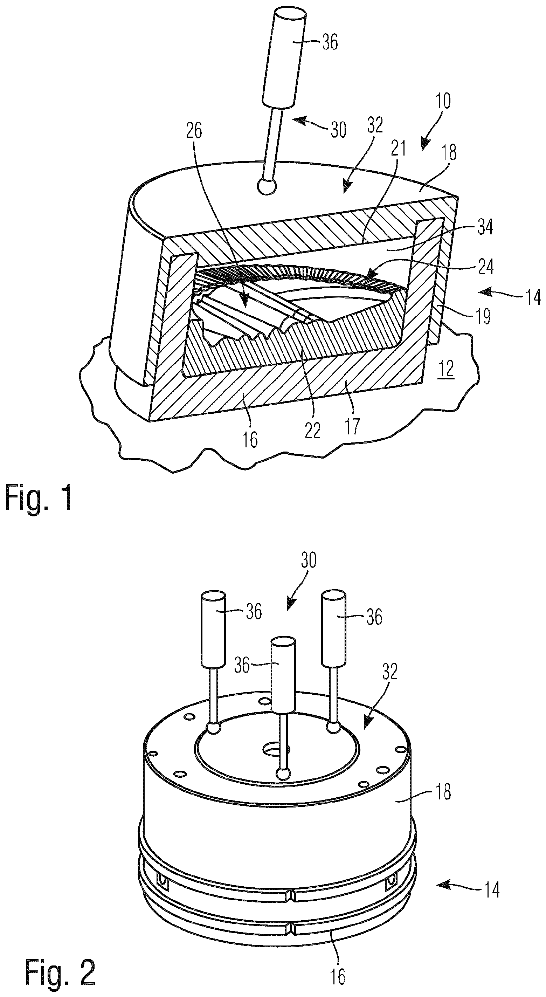

In Fig. 1 ist eine Herstellvorrichtung 10 für die Herstellung eines Rohlings eines Dentalrestaurationsteiles wie einer Dentalprothese in schematischer Darstellung dargestellt.

Die Herstellvorrichtung 10 ist dafür bestimmt, einen Rohling als Halbprodukt herzustellen, aus dem in einem späteren Herstellungs-Schritt eine Dentalprothese gefräst werden kann. Der Rohling soll aus zwei Materialien aufgebaut sein, nämlich aus Zahnmaterial für die Zähne zum einen und aus Basismaterial für die Prothesenbasis zum anderen. Zwischen diesen Materialien besteht eine Grenzfläche, die strukturiert ist, also eine Struktur ausbildet.

Die Herstellvorrichtung 10 weist eine Form 14 auf, die auf einer Unterlage 12 abgestellt ist. Die Form 14 ist als Spritzgussform ausgebildet und dementsprechend geeignet, spritzgießbares Material aufzunehmen.

Die Form 14 besteht aus einer Basis 16 und einem Deckel 18. Die Basis 16 ist topfförmig und dementsprechend im Wesentlichen U-förmig und dafür bestimmt, von dem Deckel 18 oben abgeschlossen zu werden. Ihr Boden 17 hat eine fest vorgegebene Höhe. In der Form 14 ist ein Formraum 20 gebildet, der durch Spritzgussmaterial ausfüllbar.

In der Ausführungsform gemäß Fig. 1 bildet der Deckel eine Schürze 19 aus, die die Basis 16 übergreift. Diese verbessert die gegenseitige Führung von Basis und Deckel. Ferner erstreckt sich ein kurzer Dichtvorsprung 21 in die Basis hinein. Dort ist der Formraum 20 abgedichtet.

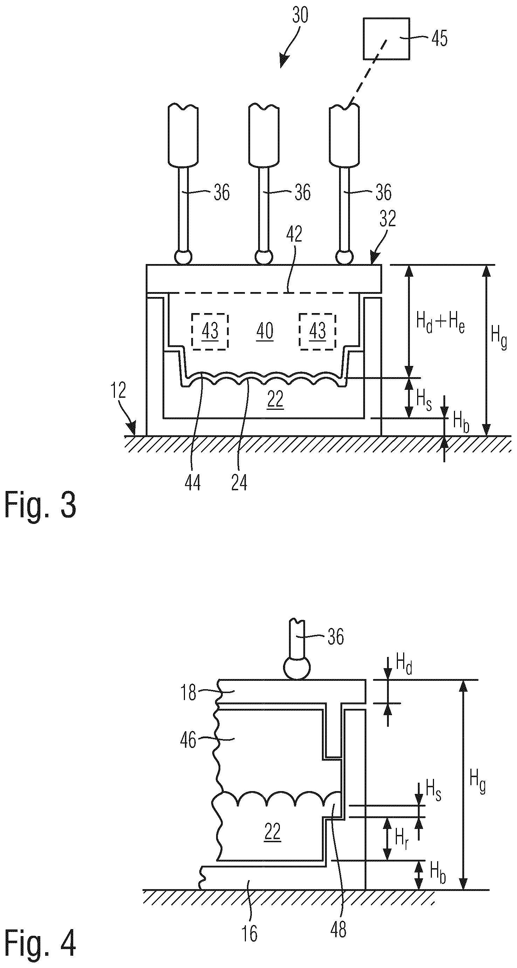

Anstelle dieser Grundausgestaltung der Form 14 ist es auch möglich, die Schürze 19 wegzulassen (Fig. 3) oder z.B. eine symmetrische Teilung der Form 14 in 2 Formhälften vorzusehen, wie es bei Spritzgussformen häufig realisiert wird.

In dem in Fig. 1 dargestellten Zustand ist der Formraum 20 mit Zahnmaterial 22 gefüllt. Das Zahnmaterial 22 ist ein weißes oder weißliches Dentalmaterial, aus dem im späteren Herstellungs-Schritt einer Dentalprothese Zähne gefräst werden.

Die dem Deckel 18 zugewandte Fläche des Zahnmaterial 22 weist eine Komplementärstruktur 24 auf. Die Komplementärstruktur 24 kann eben sein, ist aber im dargestellten Ausführungsbeispiel dreidimensional geformt, also uneben. Sie bildet zugleich eine Grenzfläche 26 zu einem noch nicht eingebrachten Basismaterial. Der Rohling besteht insofern zum einen aus Zahnmaterial 22 und zum anderen aus Basismaterial.

Die Herstellung des Rohlings in der Herstellvorrichtung 10 verläuft in folgenden Schritten:
Es wird ein Einlegekörper 40, der beispielsweise aus Fig. 3 ersichtlich ist, in den Formraum 20 eingelegt. Der Einlegekörper weist nach unten hin eine Struktur 44 auf, die komplementär zu der aus Fig. 1 ersichtlichen Komplementärstruktur 24 ist. Zwischen dieser Komplementärstruktur 24 und der Basis 16 ist ein Spritzgussraum gebildet.

Dieser Spritzgussraum wird nun mit Zahnmaterial 22 gefüllt. In dem Einlegekörper oder in dem Deckel 18 ist eine Heizung eingebaut. Die Heizung wird eingeschaltet, und das Zahnmaterial 22 wird teilweise polymerisiert, also vorpolymerisiert.

Dieser Zustand ist in Fig. 3 dargestellt, und in diesem Zustand wird von einer Höhenmesseinrichtung 30 die weiter unten beschriebene Messung vorgenommen. Hierzu ist die Oberseite des Deckels 18 als Referenzfläche 32 ausgebildet, deren Höhe gegenüber der Unterlage 12 gemessen wird.

Hieran anschließend wird der Einlegekörper 40 entfernt. Der Deckel 18 wird wieder aufgesetzt. Zwischen diesem und der Komplementärstruktur 24 ergibt sich ein Spritzgussraum 34. Dieser Zustand ist in Fig. 1 dargestellt. In den Spritzgussraum 34 wird nun Basismaterial eingefüllt. Hieran anschließend wird die nunmehr mit Basismaterial - und Zahnmaterial - gefüllte Form 14 mit einer weiteren Heizung oder der gleichen Heizung erwärmt und das Material wird polymerisiert. Da das Zahnmaterial 22 lediglich vorpolymerisiert war, wird es nun fertig polymerisiert, so dass sich eine besonders gute Verbindung zwischen den Materialien an der Grenzfläche 26 ergibt.

Auch wenn hier die Herstellung des Rohlings 46 unter Bezugnahme auf ein Spritzgussverfahren beschrieben ist, versteht es sich, dass ein beliebiges anderes Herstellverfahren möglich ist. Beispielsweise kann ein reines Gussverfahren verwendet werden. Bei diesem wird dann der Deckel 18 erst anschließend an den betreffenden Giess-Schritt aufgebracht.

Die Grenzfläche 26, die die Koplementärstruktur 24 ausbildet, kann eine beliebige geeignete Form haben. Bevorzugt ist eine an den menschlichen Gingivasaum angepasste Form, also die Form einer Kettenlinie, die sich von distal nach medial und zurück zur anderen distalen Seite erstreckt.

Gerade bei dieser Grenzfläche ist die Bestimmung der Höhenlage wichtig, denn sie soll mit der Höhenlage des menschlichen Gingivasaums übereinstimmen.

Das erfindungsgemäße Verfahren der Bestimmung der Höhenlage ist aber nicht nur bei der Grenzfläche zwischen Zahnmaterial und Basismaterial anwendbar, sondern beispielsweise auch bei den Schichten der sogenannten Multi-Materialien. Hierunter versteht man ein Zahnmaterial oder auch ein Basismaterial, das mehrschichtig ist, wobei beim Zahnmaterial typischerweise gingival dunklere Schichten und inzisal hellere Schichten bestehen. Derartige Schicht-Grenzflächen sind häufig ebenfalls nicht eben, sondern beispielsweise gewölbt, und werden in ähnlicher Weise wie hier beschrieben in Mehrfach-Formen erzeugt. Grenzflächen und deren Höhenlage in diesen Multi-Materialien lassen sich analog zu dem hier vorgestellten Verfahren bestimmen.

Bei der Ausführungsform gemäß Fig. 1 weist die Höhenmesseinrichtung 30 einen Tastfühler 36 auf. Demgegenüber sind bei der Ausführungsform gemäß Fig. 2 gleich 3 Tastfühler 36 verteilt über die Referenzfläche 32 vorgesehen. Mit dieser Ausgestaltung lässt sich nicht nur die Höhenlage, sondern auch die Lage im Raum bestimmen. Dies gilt für die Referenzfläche 32, aber in Hinblick auf die körperliche Verbindung über den Einlegekörper 40 und den Deckel 18 auch für die Grenzfläche 26.

Fig. 3 zeigt eine weitere Ausführungsform der Erfindung. Diese ist in dem Zustand dargestellt, in dem gemessen wird, in dem der Einlegekörper 40 mit seiner Struktur 44 an der durch die Struktur 44 geformten Komplementärstruktur 24 des Zahnmaterials 22 anliegt. Eine Heizvorrichtung 43 ist im Deckel 18 oder in dem Einlegekörper 40 angeordnet und dient der Vorpolymerisation des Zahnmaterials 22.

Erfindungsgemäß soll die Höhenlage Hₛ der Grenzfläche 26 im späteren Rohling 46 bestimmt werden. Bei der Ausführungsform gemäß den Figuren 1 bis 3 wird ein scheibenförmiger, flach zylindrischer Rohling erzeugt. Die Referenz für die Höhenlage ist hier die Unterseite des Rohlings, die hier der Unterseite des Zahnmaterials 22 entspricht. Die Höhenlage Hₛ ergibt sich aus der nachstehenden Formel:

Hₛ = H_{g} - H_{d} - Hₑ - H_{b}

Hierbei ist:
Hₛ: Höhenlage der Struktur im - späteren - Rohling
H_{g}: gemessene Gesamthöhe Form
H_{d}: bekannte Höhe Deckel
Hₑ: bekannte Höhe Einlegekörper
H_{b}: bekannte Höhe Basisboden

Erfindungsgemäß wird hierbei die Tatsache ausgenutzt, dass die metallische Form 14 bekannte Abmessungen aufweist. Hierzu gehören die Höhen H_{B}, H_{D} und Hₑ. Wenn nun die Gesamthöhe H_{g} aus dem Abstand der Referenzfläche 32 von der Unterlage 12 gemessen wird, lässt sich hieraus die verbleibende Variable Hₛ leicht bestimmen.

Der Einlegekörper 40 kann entweder einstückig mit dem Deckel 18 oder getrennt von diesem sein. Bei der einstückigen Ausgestaltung wird die Kombination aus Deckel 18 und Einlegekörper 40 für den zweiten Schritt bei der Herstellung des Rohlings durch einen flachen Deckel 18 ersetzt. Bei der zweistückigen Ausgestaltung wird die Form 14 geöffnet und der Einlegekörper 40 entnommen und für den zweiten Schritt der Deckel 18 wieder aufgesetzt, um den Formraum 34 zu bilden.

Der Einlegekörper 40 hat an seiner Unterseite eine Struktur 44. Bei der einstückigen Ausgestaltung ist die Struktur 44 an der Unterseite des ersten Deckels 18 vorgesehen. Der zweite Deckel ist bevorzugt plan, ggf. mit einem Vorsprung 21, wie es aus Fig. 1 ersichtlich ist.

Die Unterlage 12 kann entweder eine feste und ebene, beispielsweise metallische Unterlage sein, auf welcher die Form 14 verschiebbar ist. Die Unterlage kann auch eine Bewegungsbahn oder ein Förderweg sein, auf welchem die Form 14 abstellbar ist oder steht sein, und auf welcher oder mit welcher die Form 14 bewegbar ist.

Aus Fig. 3 ist auch eine Steuervorrichtung 45 ersichtlich, die an die Höhenmesseinrichtung 30 angeschlossen ist. Mit der Steuervorrichtung 45 wird die Berechnung gemäß der vorstehenden Formel vorgenommen, und es werden die diesbezüglichen Daten zugehörig zu dem gefertigten Rohling abgespeichert.

Aus Fig. 4 ist eine weitere erfindungsgemäße Ausführungsform ersichtlich. Bei dieser Ausführungsform ist ein Rohling 46 nicht rein flachzylindrisch, sondern weist einen umlaufenden Randflansch 48 auf. An diesem Randflansch 48 wird der Rohling 46 in die hier nicht dargestellte Aufnahme einer Fräsmaschine eingespannt. Dementsprechend dient eine Fläche des Randflansches 48 als Höhenreferenz. Im dargestellten Ausführungsbeispiel wird hierzu die untere Radialfläche des Randflansches 48, die im Zahnmaterial 22 liegt, verwendet.

Die Referenz ist also eine andere und bezieht sich nicht auf die Unterseite der Scheibe des Rohlings 46, sondern auf die Höhenlage des Randflansches Hᵣ.

Dieser Wert ist jedoch ebenso fixiert, denn er liegt hin dem metallischen Körper der Basis 16 vor. Die Bestimmung der Höhenlage Hₛ erfolgt dann mit der folgenden Formel:

Hₛ = H_{g} - H_{d} - Hₑ - Hᵣ

Hierbei ist:
Hₛ: Höhenlage der Struktur im - späteren - Rohling
H_{g}: gemessene Gesamthöhe Form
H_{d}: bekannte Höhe Deckel
Hₑ: bekannte Höhe Einlegekörper
Hᵣ: bekannte Höhe Radialfläche Randflansch

Bei dieser Ausführungsform ist der Deckel 18 ähnlich einem Stempel ausgebildet, nachdem er dafür zuständig ist, den oberen Bereich des Randflansches 48 zu formen. Er kann insofern auch als haubenförmig angesehen werden. Aus Fig-. 5 ist eine weitere Ausführungsform einer Herstellvorrichtung 10 in Teilen ersichtlich.

Es ist lediglich die Basis 16 dargestellt und der Deckel 18 ist weggelassen. In die Basis 16 ist ein erster Teil 50 eines herzustellenden Fräsrohlings eingelegt. Dieser Teil weist an seiner Oberseite bereits die Komplementärstruktur 24 auf.

Der Teil 50 passt genau in die Basis 16 hinein. Er kann in beliebiger geeigneter Weise vorgefertigt sein. Beispielsweise kann er durch ein additives Verfahren wie 3D-Druck hergestellt worden sein. Er kann auch in einer speziellen Spritzgussform hergestellt worden sein oder einer solchen, der der hier vorgestellten Form 14 entspricht. Es wäre auch möglich, den Teil 50 subtraktiv herzustellen, also beispielsweise durch Fräsen.

Der Teil 50 weist an seiner Oberseite, beispielsweise am Rand, eine Material-Referenzfläche 54 auf. Deren Lage wird mittels eines Messfühlers 36 der Höhenmesseinrichtung 30 gemessen. Es kann in die gleiche Höhenmesseinrichtung 30 wie bei den übrigen Ausführungsformen verwendet werden oder eine andere. Das Ausgangssignal der Höhenmesseinrichtung 30 wird wie zuvor beschrieben der Steuervorrichtung zugeleitet und ausgewertet. Wenn die Höhenlage der Material-Referenzfläche 54 innerhalb eines Toleranzbereichs von z.B. 0,5 mm ist, wird der Fräsrohling fertiggestellt, indem der zweite Deckel 18 mit der planen Unterseite wie gemäß Fig. 1 auf die Basis 16 aufgesetzt wird und dadurch die Form 14 geschlossen wird.

Es wird Basismaterial zur Ausbildung eines zweiten Teils des Rohlings eingespritzt und es wird die Polymerisation vorgenommen. Hierdurch entsteht ein Rohling aus dem vorgefertigten ersten Teil 50 aus Zahnmaterial und dem eingespritzten Basismaterial, dessen Grenzfläche auf einer Höhe ist, die innerhalb der vorgegebenen Toleranz liegt.

Die Berechnung der Höhe Hₛ des ersten Teils 50 erfolgt analog zu dem zuvor beschriebenen durch die Differenzbildung H_{g} - H_{b}. Auch hier hat der Boden 17 eine vorbekannte Höhe. Die eigentliche Messung erfolgt zwischen der Unterlage 12 und der Material-Referenzfläche 54.

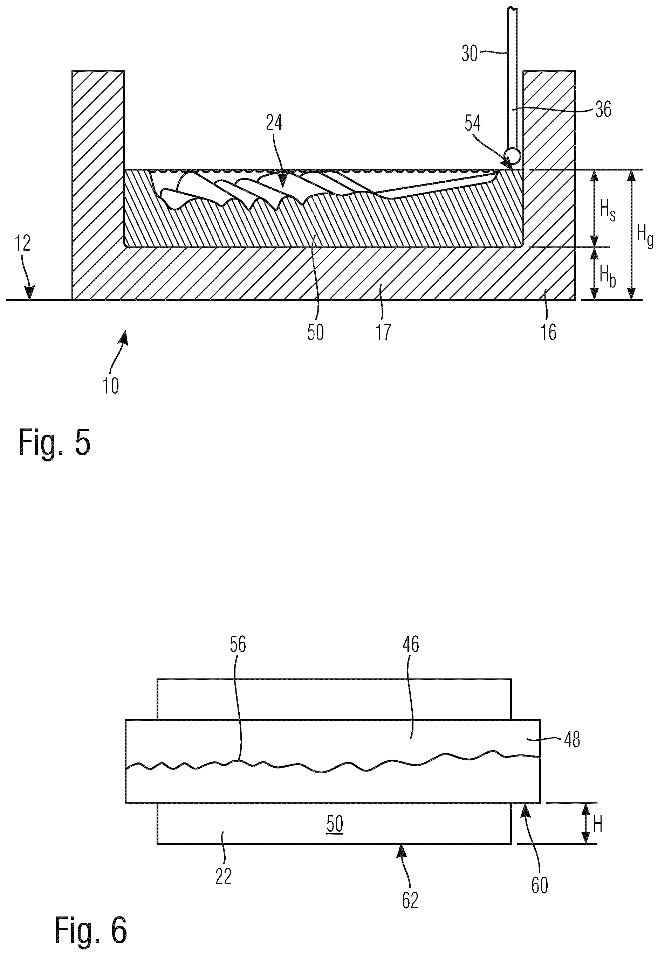

Aus Fig. 6 ist ein Rohling 46 schematisch ersichtlich. Der Rohling 46 ist hergestellt und weist einen umlaufenden Randflansch 48 auf. Eine Grenzfläche 56 zwischen dem Zahnmaterial 22 und dem Basismaterial erstreckt sich innerhalb der Höhe des Randflansches 48.

An dieser Stelle entsteht bei der fertigen Prothese später der Gingivasaum. Ihre Höhenlage ist auf etwa 0,5 mm genau bestimmt.

Für die Herstellung der Prothese wird der Rohling 46 in eine Spannvorrichtung einer Dental-Fräsmaschine eingespannt. Hierbei ist es erforderlich, die relative Position des Rohlings zur Spannvorrichtung wesentlich genauer zu bestimmen. Hierzu bildet die untere Fläche 60 des Randflanschs 48 eine Referenzfläche aus, deren Höhe H zur Unterseite 62 des Fräsrohlings genau festgelegt ist, beispielsweise mit einer Toleranz von 0,02 mm.

Es ist ohne weiteres möglich, eine so geringe Toleranz durch Verwendung einer Stahlform für die Basis 16 einzuhalten, denn diese wird für die Ausgestaltungen auch des Randflansches 48 verwendet. Wenn die Fläche 60 als Referenzfläche verwendet wird, ist es nicht erforderlich, die Höhenmesseinrichtung 30 für die Bestimmung der Höhenlage dieser zu verwenden.

Wenn hingegen die gegenüberliegende Fläche, also die aus dem Basismaterial bestehende Fläche, verwendet werden soll, muss deren Höhe durch die Verwendung der Höhenmesseinrichtung 30 wie oben beschrieben bestimmt werden.

## Patentansprüche

1. Herstellvorrichtung : (10) für die Herstellung eines Rohlings (46) eines Dentalrestaurationsteiles mit einer Form (14) für die Aufnahme von Rohlingsmaterial, die eine Basis (16) und einen Stempel oder Deckel (18) mit einer Unterseite aufweist, und einer Steuervorrichtung (15) für die Herstellvorrichtung, wobei eine Höhenmesseinrichtung (30) an die Steuervorrichtung (45) angeschlossen ist, die die Höhe einer mit dem Stempel oder Deckel (18) verbundenen Referenzfläche : (32) bezogen auf die Basis (16) misst, und die Steuervorrichtung (45) basierend auf der gemessenen Höhe die Höhenlage der Unterseite des Stempels oder des Deckels (18) berechnet und an der Unterseite des Stempels oder Deckels (18) eine Struktur (44) ausgebildet ist, die wellenförmig ist, wobei als Rohlingsmaterialien Zahnmaterial und Basismaterial eingesetzt sind und die Struktur (44) einer Grenzfläche (26) zwischen dem Zahnmaterial (22) und dem Basismaterial in einem herzustellenden Rohling (46) entspricht, und entlang eines Gingivasaumes in dem Rohling eine Kettenlinie bildet; wobei die Steuervorrichtung (45) basierend auf dieser gemessenen Höhe die Höhenlage (Hs) der Struktur (44) berechnet, und die von der Steuervorrichtung (45) berechnete Höhenlage (Hs) der Struktur die Berechnung mindestens eines Referenzpunktes der Struktur (44) umfasst, und die Steuervorrichtung (45) Daten zur Höhenlage (Hs) der Struktur (44) ausgibt.

2. Herstellvorrichtung nach Anspruch 1, **dadurch gekennzeichnet, dass** die Referenzfläche (32) auf der Oberseite des Stempel oder Deckels (18) ausgebildet ist und Höhenmesseinrichtung (30) den Abstand zwischen der Oberseite und der Basis oder einer Unterlage, auf der die Basis abgestellt ist, misst.

3. Herstellvorrichtung nach einem der vorhergehenden Ansprüche, **dadurch gekennzeichnet, dass** die Höhenmesseinrichtung (30) mindestens einen optischen Fühler oder einen Tastfühler (36) aufweist, mit dem neben der Höhe auch die Lage des Stempels oder Deckels (18) im dreidimensionalen Raum messbar ist.

4. Herstellvorrichtung nach Anspruch 1, **dadurch gekennzeichnet, dass** eine Ausgabevorrichtung an die Steuervorrichtung (45) angeschlossen ist und die Höhenlage auf der Unterlage, auf der die Form abstellbar ist oder steht, ausgibt, insbesondere an eine Datenbank für die Zuordnung der Daten zu einem je geformten Rohling für das Dentalrestaurationsteil, oder an einen Drucker für die Erzeugung von Etiketten ausgibt, mit welchen Etiketten für die Anbringung an dem Rohling druckbar sind, oder an eine RFID-Chip-Programmiervorrichtung ausgibt, oder dass die Steuervorrichtung die Daten in einem Speicher, insbesondere einer Datenbank, abspeichert, welcher Speicher in Zugriff, insbesondere in online-Zugriff einer Fräsmaschine für das Fräsen des Dentalrestaurationsteils bringbar ist.

5. Herstellvorrichtung nach einem der Ansprüche 1 oder 4, **dadurch gekennzeichnet, dass** die Struktur (44) dreidimensional im Raum verläuft und eine Strukturebene aufspannt, die eine Neigung zur Basis von bis zu 30 %, bevorzugt von weniger als 15 % hat, und deren Höhe und insbesondere Lage im Raum gegenüber einer Unterlage, insbesondere einem Förderweg, auf welchem die Form abstellbar ist oder steht, unter Verwendung der Messergebnisse der Höhenmesseinrichtung (30) von der Steuervorrichtung (45) berechenbar ist.

6. Herstellvorrichtung nach einem der Ansprüche 1 oder 5, **dadurch gekennzeichnet, dass** die Struktur (44) der Grenzfläche zwischen unterschiedlichen Schichten von Zahnmaterial und/oder von Basismaterial im Rohling entspricht.

7. Herstellvorrichtung nach einem der vorhergehenden Ansprüche, **dadurch gekennzeichnet, dass** der Stempel oder Deckel (18) einen Einlegekörper (40) mit der Struktur (44) aufweist, oder dieser zumindest indirekt an dem Stempel oder Deckel (18) anliegt, und dass die Messung der Höhenlage sich auf die Messung der Unterseite des Einlegekörpers bezieht

8. Herstellvorrichtung nach Anspruch 7, **dadurch gekennzeichnet, dass** die Steuervorrichtung (45) für die Berechnung den bekannten Abstand (Hd+He oder Hd) zwischen der Unterseite des Einlagekörpers (40) oder des Deckels (18) und der Oberseite des Deckels (18) von der von der Höhenmesseinrichtung gemessenen Höhe und den Abstand (Hb) zwischen der unteren Innenseite der Form und der Unterseite der Form abzieht, um die Höhenlage (Hs) der Struktur (44) im Rohling zu ermitteln.

9. Herstellvorrichtung nach einem der vorhergehenden Ansprüche, **dadurch gekennzeichnet, dass** die Steuervorrichtung (45) einen materialabhängigen oder materialbedingten Schrumpffaktor für die Schrumpfung zwischen Teilpolymerisation und Vollpolymerisation bei der Ausgabe berücksichtigt.

10. Herstellvorrichtung nach einem der vorhergehenden Ansprüche , **dadurch gekennzeichnet, dass** die Form (14) einen umlaufenden Rand ausspart, der einen vorspringenden umlaufenden Rand des Rohlings (46) erzeugt, dessen Höhenlage als berechnete Referenz beim Fräsen des Rohlings berücksichtigt wird, welcher Rand insbesondere von der Höhe her der Struktur benachbart ist, insbesondere, dass die Form, insbesondere die Basis der Form, eine untere Referenzfläche aufweist oder ausbildet, dessen Höhenlage als berechnete Referenz beim Fräsen des Rohlings berücksichtigt wird.

11. Herstellvorrichtung nach einem der vorhergehenden Ansprüche, **dadurch gekennzeichnet, dass** die von der Steuervorrichtung (45) ausgegebenen Daten der Höhenlage auch Daten umfassen, die die Grenzfläche zwischen Zahnmaterial und Basismaterial kennzeichnen.

12. Verfahren für die Herstellung eines Rohlings (46) für ein Dentalrestaurationsteil, mit einer Herstellvorrichtung (10) mit einer Form (14) für die Aufnahme von Rohlingsmaterial , die eine Basis (16) und einen Stempel oder Deckel (18) mit einer Unterseite aufweist, und mit einer Steuervorrichtung (45) für die Herstellvorrichtung, wobei eine Höhenmesseinrichtung (30) mindestens einen Messwert an die Steuervorrichtung (45) ausgibt, der die Höhe einer mit dem Stempel oder Deckel (18) verbundenen Referenzfläche bezogen auf die Basis (16) wiedergibt, und an der Unterseite des Stempels : oder Deckels P (18) eine Struktur (44) ausgebildet ist, die wellenförmig ist, wobei als Rohlingsmaterialien Zahnmaterial (22) und Basismaterial eingesetzt sind und die Struktur (44) einer Grenzfläche (26) zwischen dem Zahnmaterial (22) und dem Basismaterial in einem herzustellenden Rohling (46) entspricht, und entlang eines Gingivasaumes in dem Rohling eine Kettenlinie bildet; wobei die Steuervorrichtung (45) basierend auf der gemessenen Höhe die Höhenlage (Hs) der Struktur (44) berechnet und die Berechnung mindestens eines Referenzpunktes der Struktur umfasst, und die Steuervorrichtung (45) Daten zur Höhenlage (Hs) der Struktur (44) ausgibt.

13. Verfahren nach Anspruch 12, **dadurch gekennzeichnet, dass** mehrere, insbesondere 2 bis 6, Formen für die Erstellung des Rohlings des Dentalrestaurationsteils nacheinander benutzt werden, wobei eine erste Form eine Struktur in einer ersten Höhe - bezogen auf die Basis - hat, die unterschiedlich zur Höhenlage der Struktur einer zweiten Form ist, , und dass die Steuervorrichtung (45) die Höhenlage der Struktur der ersten Form berechnet und die weitere Herstellung in der zweiten Form freigibt, wenn die Höhenlage innerhalb eines vorgegebenen Toleranzbereichs ist.

14. Verfahren nach Anspruch 12, **dadurch gekennzeichnet, dass** ein erstes Material, insbesondere das Zahnmaterial (22) vorgefertigt, insbesondere per 3D-Druck vorgefertigt wird und in die Form eingebracht wird und an dem ersten Material die Material-Referenzfläche ausgebildet ist.

## Claims

1. A manufacturing device (10) for manufacturing a blank (46) for a dental restoration part, comprising a mold (14) for receiving blank material, said mold having a base (16) and a punch or cover (18) with an underside, and a control device (15) for the manufacturing device, wherein a height measuring device (30) is connected to the control device (45), which measures the height of a reference surface (32) connected to the punch or cover (18), relative to the base (16), and wherein the control device (45) calculates the height position of the underside of the punch or cover (18) based on this measured height, and that a wave-like structure (44) is formed on the underside of the punch or cover (18), wherein as blank materials tooth material and base material are used and the structure (44) corresponds to a boundary surface (26) between the tooth material (22) and the base material in a blank (46) to be manufactured, and forms a chain line along a gingival margin within the blank; wherein the control device (45) calculates the height position (Hs) of the structure (44) based on said measured height, and the height position (Hs) of the structure calculated by the control device (45) comprises the calculation of at least one reference point of the structure (44), and the control device (45) outputs height position (Hs) data of the structure (44).

2. The manufacturing device according to claim 1, **characterized in that** the reference surface (32) is formed on the top of the punch or cover (18) and the height measuring device (30) measures the distance between the upper side and the base or a support on which the base is placed.

3. The manufacturing device according to one of the preceding claims, **characterized in that** the height measuring device (30) comprises at least one optical sensor or one touch probe (36), with which, in addition to the height, the position of the punch or cover (18) can also be measured in the three-dimensional space.

4. The manufacturing device according to claim 1 **characterized in that** an output device is connected to the control device (45) and outputs the height position on the base, on which the mold can be placed or is placed, in particular to a database for the assignment of the data to a respective molded blank for the dental restoration part, or to a printer for generating labels which can be used to print labels for attachment to the blank, or to a RFID chip programming device, or **in that** the control device stores the data in a memory, in particular a database, which memory can be accessed, in particular online accessed, by a milling machine for milling the dental restoration part.

5. The manufacturing device according to one of claims 1 or 4, **characterized in that** the structure (44) extends three-dimensionally in space and spans a structural plane which has an inclination to the base of up to 30%, preferably less than 15%, and whose height and in particular whose spatial position relative to a support, in particular a conveyor path, on which the mold can be placed or stands, can be calculated by the control device (45) using the measurement results of the height measuring device (30).

6. The manufacturing device according to one of claims 1 or 5, **characterized in that** the structure (44) corresponds to the boundary surface between different layers of tooth material and/or of base material in the blank.

7. The manufacturing device according to one of the preceding claims, **characterized in that** the punch or cover (18) comprises an insert body (40) with the structure (44), or said insert body at least indirectly abuts against the punch or cover (18), and **in that** the measurement of the height position relates to the measurement of the underside of the insert body.

8. The manufacturing device according to claim 7, **characterized in that** for the calculation the control device (45) subtracts the known distance (Hd+He or Hd) between the underside of the insert body (40) or the cover (18) and the top of the cover (18) from the height measured by the height measuring device and the distance (Hb) between the lower inside of the mold and the underside of the mold in order to determine the height position (Hs) of the structure (44) in the blank.

9. The manufacturing device according to one of the preceding claims, **characterized in that** the control device (45) takes into account a material-dependent or material-conditional shrinkage factor for the shrinkage between partial polymerization and full polymerization in the output.

10. The manufacturing device according to one of the preceding claims, **characterized in that** the mold (14) omits a circumferential edge which results in a projecting circumferential edge on the blank (46), the height position of which is taken into account as a calculated reference when milling the blank, the said edge being adjacent to the structure, in particular in terms of height, in particular **in that** the mold, in particular the base of the mold, has or forms a lower reference surface, the height position of which is taken into account as a calculated reference when milling the blank.

11. The manufacturing device according to one of the preceding claims, **characterized in that** the height position data output by the control device (45) also comprises data characterizing the boundary surface between the tooth material and the base material.

12. A method for manufacturing a blank (46) for a dental restoration part by means of a manufacturing device (10), comprising a mold (14) for receiving blank material, with said mold having a base (16) and a punch or cover (18) with an underside, and with a control device (45) for the manufacturing device, wherein a height measuring device (30) outputs at least one measured value to the control device (45) which represents the height of a reference surface connected to the punch or cover (18) relative to the base (16), and in that a wave-like structure (44) is formed on the underside of the punch or cover (18), wherein as blank materials tooth material (22) and base material are used and the structure (44) corresponds to a boundary surface (26) between the tooth material (22) and the base material in a blank to be manufactured (46), and forms a chain line along a gingival margin in the blank;
wherein the control device (45) calculates the height position (Hs) of the structure (44) based on said measured height and comprises the calculation of at least one reference point of the structure, and the control device (45) outputs height position (Hs) data of the structure (44).

13. The method according to claim 12, **characterized in that** several, in particular 2 to 6, molds are used successively for the production of the blank for the dental restoration part, a first mold having a structure at a first height - relative to the base - which is different from the height position of the structure of a second mold, and **in that** the control device (45) calculates the height position of the structure of the first mold and allows further production in the second mold if the height position is within a predetermined tolerance range.

14. The method according to claim 12, **characterized in that** a first material, in particular the tooth material (22), is prefabricated, in particular prefabricated by 3D printing, and is introduced into the mold, and the material reference surface is formed on the first material.

## Revendications

1. Dispositif de fabrication (10) pour la fabrication d'un lingotin (46) d'une pièce de restauration dentaire, comprenant un moule (14) destiné à recevoir le matériau du lingotin, qui présente une base (16) et un poinçon ou un couvercle (18) avec une face inférieure, et un dispositif de commande (15) pour le dispositif de fabrication, où un dispositif de mesure de hauteur (30) est raccordé au dispositif de commande (45), qui mesure la hauteur d'une surface de référence (32) reliée au poinçon ou au couvercle (18) par rapport à la base (16), et le dispositif de commande (45) calcule, sur la base de la hauteur mesurée, la position en hauteur de la face inférieure du poinçon ou du couvercle (18) et une structure (44) ondulée est formée sur la face inférieure du poinçon ou du couvercle (18), où des matériaux dentaires et des matériaux de base sont utilisés comme matériaux bruts et la structure (44) correspond à une interface (26) entre le matériau dentaire (22) et le matériau de base dans un lingotin (46) à fabriquer, et forme une ligne chaînée le long d'un rebord gingival dans le lingotin ;
où le dispositif de commande (45) calcule, sur la base de cette hauteur mesurée, la position en hauteur (Hs) de la structure (44), et l'altitude (Hs) de la structure calculée par le dispositif de commande (45) comprend le calcul d'au moins un point de référence de la structure (44), et le dispositif de commande (45) délivre des données relatives à l'altitude (Hs) de la structure (44).

2. Dispositif de fabrication selon la revendication 1, **caractérisé en ce que** la surface de référence (32) est formée sur la face supérieure du poinçon ou du couvercle (18) et **en ce que** le dispositif de mesure de hauteur (30) mesure la distance entre la face supérieure et la base ou un support sur lequel la base est posée.

3. Dispositif de fabrication selon l'une des revendications précédentes, **caractérisé en ce que** le dispositif de mesure de hauteur (30) comporte au moins un capteur optique ou un capteur tactile (36) permettant de mesurer, outre la hauteur, la position du tampon ou du couvercle dans l'espace tridimensionnel (18).

4. Dispositif de fabrication selon la revendication 1, **caractérisé en ce qu'**un dispositif de sortie est connecté au dispositif de commande (45) et transmet la position en hauteur sur le support sur lequel le moule peut être déposé ou se trouve, en particulier à une base de données pour l'attribution des données à un lingotin moulé pour la pièce de restauration dentaire, ou à une imprimante pour la production d'étiquettes avec lesquelles des étiquettes peuvent être imprimées pour être apposées sur le lingotin, ou à un dispositif de programmation de puces RFID, ou que le dispositif de commande enregistre les données dans une mémoire, en particulier une base de données, laquelle mémoire peut être accessible, en particulier en ligne, par une fraiseuse pour le fraisage de la pièce de restauration dentaire.

5. Dispositif de fabrication selon l'une des revendications 1 ou 4, **caractérisé en ce que** la structure (44) s'étend de manière tridimensionnelle dans l'espace et s'étend sur un plan structurel qui présente une inclinaison par rapport à la base pouvant atteindre 30 %, de préférence inférieure à 15 %, et dont la hauteur et en particulier la position dans l'espace par rapport à un support, en particulier un chemin de transport, sur lequel le moule peut être déposé ou se trouve, peuvent être calculées par le dispositif de commande (45) à l'aide des résultats de mesure du dispositif de mesure de hauteur (30).

6. Dispositif de fabrication selon l'une des revendications 1 ou 5, **caractérisé en ce que** la structure (44) correspond à l'interface entre différentes couches de matériau dentaire et/ou de matériau de base dans le lingotin.

7. Dispositif de fabrication selon l'une des revendications précédentes, **caractérisé en ce que** le poinçon ou le couvercle (18) comporte un corps d'insertion (40) présentant la structure (44), ou **en ce que** celui-ci repose au moins indirectement contre le poinçon ou le couvercle (18), et **en ce que** la mesure de la hauteur se rapporte à la mesure de la face inférieure du corps d'insertion.

8. Dispositif de fabrication selon la revendication 7, **caractérisé en ce que** le dispositif de commande (45) calcule la distance connue (Hd+He ou Hd) entre la face inférieure du corps d'insertion (40) ou du couvercle (18) et la face supérieure du couvercle (18) à partir de la hauteur mesurée par le dispositif de mesure de hauteur et de la distance (Hb) entre la face intérieure inférieure du moule et la face inférieure du moule afin de déterminer la position en hauteur (Hs) de la structure (44) dans le lingotin.

9. Dispositif de fabrication selon l'une des revendications précédentes, **caractérisé en ce que** le dispositif de commande (45) tient compte d'un taux de retrait dépendant du matériau ou lié au matériau pour la contraction entre la polymérisation partielle et la polymérisation complète lors de la sortie.

10. Dispositif de fabrication selon l'une des revendications précédentes, **caractérisé en ce que** le moule (14) présente un rebord périphérique qui crée un rebord périphérique saillant du lingotin (46), dont la hauteur est prise en compte comme référence calculée lors du fraisage du lingotin, lequel rebord est en particulier adjacent à la structure en termes de hauteur, en particulier que le moule, en particulier la base du moule, présente ou forme une surface de référence inférieure dont la hauteur est prise en compte comme référence calculée lors du fraisage du lingotin.

11. Dispositif de fabrication selon l'une des revendications précédentes, **caractérisé en ce que** les données de hauteur émises par le dispositif de commande (45) comprennent également des données qui caractérisent l'interface entre le matériau dentaire et le matériau de base.

12. Procédé de fabrication d'un lingotin (46) pour une pièce de restauration dentaire, avec un dispositif de fabrication (10) comprenant un moule (14) destiné à recevoir le matériau du lingotin, qui présente une base (16) et un poinçon ou un couvercle (18) avec une face inférieure, et un dispositif de commande (45) pour le dispositif de fabrication, où un dispositif de mesure de hauteur (30) transmet au moins une valeur de mesure au dispositif de commande (45), qui reflète la hauteur d'une surface de référence reliée au poinçon ou au couvercle (18) par rapport à la base (16), et une structure (44) ondulée est formée sur la face inférieure du poinçon ou du couvercle (18), où le matériau brut utilisé est un matériau dentaire (22) et un matériau de base, et la structure (44) correspond à une interface (26) entre le matériau dentaire (22) et le matériau de base dans un lingotin à fabriquer (46) et forme une ligne chaînée le long d'un rebord gingival dans le lingotin, où le dispositif de commande (45) calcule la position en hauteur (Hs) de la structure (44) sur la base de la hauteur mesurée et le calcul comprend au moins un point de référence de la structure, et le dispositif de commande (45) délivre des données relatives à la position en hauteur (Hs) de la structure (44).

13. Procédé selon la revendication 12, **caractérisé en ce que** plusieurs moules, en particulier entre deux et six, sont utilisés successivement pour la fabrication du lingotin de la pièce de restauration dentaire, où un premier moule a une structure à une première hauteur - par rapport à la base - qui est différente de la hauteur de la structure d'un deuxième moule, et que le dispositif de commande (45) calcule la hauteur de la structure du premier moule et autorise la poursuite de la fabrication dans le deuxième moule lorsque la hauteur se situe dans une plage de tolérance prédéfinie.

14. Procédé selon la revendication 12, **caractérisé en ce qu'**un premier matériau, en particulier le matériau dentaire (22), est préfabriqué, en particulier par impression 3D, et est introduit dans le moule, et **en ce que** la surface de référence du matériau est formée sur le premier matériau.
